# EUROPEAN PATENT SPECIFICATION

(11) **EP 3 509 426 B1**
(45) Date of publication and mention of the grant of the patent: **22.04.2020**
(21) Application number: 17758135.2
(22) Date of filing: 24.08.2017
(51) Int. Cl.: A23F 3/06, A23F 3/08

(54) **A PROCESS FOR PRODUCING A TEA PRODUCT**
VERFAHREN ZUR HERSTELLUNG EINES TEEPRODUKTS
PROCEDE DE PRODUCTION D'UN PRODUIT DE THE

(30) Priority: 06.09.2016 EP 16187380
(43) Date of publication of application: 17.07.2019
(73) Proprietor: Unilever N.V., 3013 AL Rotterdam (NL); Unilever PLC, London, Greater London EC4Y 0DY (GB)
(72) Inventor: BASAVARAJU, Lokesh, Whitefield Bangalore 560 066 (IN); GUTTAPADU, Sreeramulu, Whitefield Bangalore 560 066 (IN); PALAGIRI, Swathy, Whitefield Bangalore 560 066 (IN); SINGH, Gurmeet, Whitefield Bangalore 560 066 (IN)
(74) Representative: Warner, Guy Jonathan
(86) International application number: PCT/EP2017/071356
(87) International publication number: WO 2018/046310

(56) References cited:
- WO-A1-99/40799
- WO-A1-2013/075912
- WO-A1-2014/206883
- US-A1- 2003 064 130
- US-B1- 6 254 902
- US-B1- 6 432 467
- K. I. Tomlins ET AL: "Review of withering in the manufacture of black tea", , 1 January 1997 (1997-01-01), pages 12-19, XP055323271, Retrieved from the Internet: URL:http://www.cabi.org/gara/FullTextPDF/P re2000/19970302463.pdf [retrieved on 2016-11-25]

## Description

### Field of the invention

The present invention relates to a process of producing a tea product. More particularly the present invention relates to a process of producing a leaf tea product with black tea characteristics.

### Background of the invention

The size of the black tea leaf product has commercial significance in the tea industry. Long leaf tea products fetch higher prices in the marketplace and are also preferred by the consumers. Manufacture of regular black tea involves the following steps: (i) withering of fresh leaves of the plant *Camellia sinensis,* which is a process where plucked tea leaves are allowed to lose moisture (e.g. in a shallow trough) and during which biochemical reactions occur causing the formation of many beneficial compounds including aroma compounds; (ii) maceration of the withered leaves which is a process where the tea cellular structure is broken, causing further biochemical reactions to occur; (iii) fermentation of the macerated leaves in which enzymes in the tea leaf use atmospheric oxygen to oxidize various substrates to produce coloured products; and (iv) drying of the fermented leaves at high temperatures to stop the enzyme activity and bring down the moisture content.

It is essential to macerate (or any other form of size reduction/damage) the leaves for fermentation, which produces typical taste of black leaf tea product which includes astringency, aroma, colour etc. As an effect of this process, the size of the leaf is reduced.

Nevertheless, there have been some efforts to obtain whole leaf fermented tea products.

US6254902 (Lipton, 2001) discloses a method for processing whole leaf tea that involves impregnating tea leaves with liquid carbon dioxide within a pressure vessel, depressurizing the vessel at a rate that is sufficient to freeze the liquid carbon dioxide, applying sufficient heat to cause the frozen carbon dioxide to sublime and consequently initiating fermentation within the leaves, allowing the tea to ferment for a time that is sufficient to achieve desired liquor properties, and drying the fermented product to yield the whole leaf tea. The main drawback of this process is it uses pressurized system with liquid carbon dioxide, which is a hazardous substance, and the process is difficult to implement and not cost effective.

WO 2014/206883 (Unilever, 2014) discloses a process of producing a long leaf tea product with black tea characteristics. The process comprises the steps of: (a) incubating fresh tea leaf at a temperature in the range 4°C to 60°C under anaerobic conditions for a period of 4 to 36 hours; and (b) exposing the leaf at a temperature of 15 to 35°C for 70 minutes to 4 hours; wherein there is no step of comminution of the tea leaf before incubation and/or before step (b). Although, this process it easy to implement, however the back tea characteristics and the infusibility of the resultant product is not up to the mark and can be improved upon.

Hence, a whole leaf tea product with good and improved black tea characteristics remains to be desired.

It is therefore an object of the present invention to provide a suitable alternative for producing a long leaf tea product with significant black tea characteristics.

It is another object of the present invention to provide a process for producing a long leaf tea product with significant black tea characteristics.

It is a further object of the present invention to provide a process for producing a long leaf tea product with significant black tea characteristics without using liquid carbon dioxide or any pressurized system and moreover which is simple, cost effective and easy to implement.

The present inventors while working on this have surprisingly found that a process that includes an initial step of anaerobic conditioning followed by microporation and exposure at ambient condition provides a long leaf tea product with black tea characteristics without comminution and thereby satisfies one or more of the above said objects.

### Summary of the invention

In a first aspect the present invention provides a process of preparation of a leaf tea product with black tea characteristics comprising the steps of:
a. incubating fresh tea leaf at a temperature in the range 4°C to 60°C under anaerobic conditions for a period of 4 to 50 hours;
b. creating micropores having diameter in the range of 5 to 100 µm on the incubated leaf;
c. exposing the leaf at a temperature of 15 to 35°C for 15 minutes to 4 hours.

In a second aspect, the present invention provides a leaf tea product as obtained and/or obtainable by the process of first aspect.

### Detailed description of the invention

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Fresh tea leaf" refers to tea leaf, buds and/or stem that have never been dried to a water content of less than 30% by weight, and usually have water content in the range 60 to 90%.

"Black tea" refers to substantially fermented tea. Black tea has different characteristics to green tea. Black tea is more astringent in taste and less bitter than green tea. The redness of black tea liquor is also significantly higher than that of green tea. Black tea also contains higher level of theaflavins.

Therefore, "black tea characteristics" as mentioned herein this specification preferably means a tea product that is more astringent and less bitter in taste with increased red coloured liquor and with higher level of theaflavins content and which possesses characteristics similar to black tea as defined above

The word "micropores" preferably means small pin-holes of diameter less than 200 µm, more preferably less than 150 µm and most preferably less than 100 µm.

The present invention provides a process of preparation of a leaf tea product with black tea characteristics comprising the steps of:
a. incubating fresh tea leaf at a temperature in the range 4°C to 60°C under anaerobic conditions for a period of 4 to 50 hours;
b. creating micropores having diameter in the range of 5 to 100 µm on the incubated leaf;
c. exposing the leaf to a temperature of 15 to 35°C for 15 minutes to 4 hours.

### Step (a):

### Anaerobic incubation:

Step (a) involves incubating the plucked leaf at a temperature in the range 4°C to 60°C under anaerobic conditions for a period of 4 to 50 hours. The term "anaerobic conditions" as used herein means that the gas phase in contact with the leaf has less than 3% oxygen by volume. Oxygen in the gas phase in contact with the leaf is preferably less than 2%, more preferably less than 1%. It is particularly preferred that the gas phase in contact with the leaf is substantially free of oxygen.

### Anaerobic conditions:

Preferably, the anaerobic conditions in the step (a) are achieved by:
i. Placing the plucked tea leaf in a container, and closing the container, or;
ii. Placing the tea leaf in a container, purging a gas other than oxygen through the container, and closing the container.

By placing the plucked leaf in a container and closing the container, the oxygen concentration in the gas phase decreases with time and anaerobic conditions are achieved after keeping the container closed for certain amount of time. The container is closed for duration preferably greater than about 3 hours, more preferably greater than 4 hours and most preferably greater than 6 hours or even greater than 8 hours. This way of achieving anaerobic condition is preferable as it is cost effective and easy to implement.

Alternatively, the anaerobic conditions are achieved by placing the leaf in a container, purging a gas other than oxygen through the container and closing the container. The gas other than oxygen is preferably nitrogen or carbon dioxide, more preferably nitrogen. The gas other than oxygen preferably does not include air.

Once the container is closed in the step (i) or (ii) above, there is no particular restriction as to the pressure in the container. Pressure inside the closed container is preferably from 1 to 1000 mm Hg absolute (1.3 milibar to 1.3 bar), more preferably 10 to 800 mm Hg absolute (13 millibar to 1 bar).

It is preferred that the moisture loss from the leaf during the step (a) is as low as possible. This is advantageously and conveniently achieved by carrying out step (a) under closed conditions. The incubated tea leaf after the step (a) comprises water in the range of preferably from 70 to 75% by weight.

### Incubation temperature:

Step (a) is carried out at a temperature in the range 4°C to 60°C, preferably in the range 4 to 55°C, more preferably in the range 10 to 40°C.

### Duration of anaerobic incubation:

The plucked leaf is incubated under anaerobic conditions for a period of 4 to 50 hours, preferably for a period of 6 to 40 hours, more preferably for a period of 8 to 30 hours, most preferably for a period of 10 to 24 hours. It is particularly preferred that the period of anaerobic incubation is 12 to 20 hours.

### Step (b):

### Creating micropores on the incubated leaf:

Step (b) involves creation of micropores on the incubated leaf. After the incubation under anaerobic condition as explained above, the leaves are subjected to the process of creating micropores.

Creation of micropores preferably means creating small pores of diameter ranging from 5 to 100 µm, more preferably 20 to 80 µm and most preferably 30 to 70 µm.

The micropores can preferably be created by using a technique selected from the group consisting of lasers, sand blasting, dry ice blasting, micropins, electroporation, and combinations of one or more thereof. However, the creation of the micropores is not limited to the use of the above techniques. Any process that can create micropores on the leaf can suitably be used.

In a preferred embodiment of using lasers for creating micropores, the tea leaves is preferably placed on a flat surface and exposed to laser. Laser can preferably be emitted in two different modes, either continuously or in pulsed manner. In general continuous laser is more effective to obtain homogenous microporation of tea leaves

Alternately and preferably tea leaves may also be passed through a laser tunnel pneumatically in a circular motion. While passing the tea leaves through the tunnel, laser may be emitted in a continuous mode to obtain homogeneous microporation of tea leaves

The energy of laser is preferably in the range from 1 to 50 mJ, more preferably 10 to 25 mJ and most preferably 15 - 20 mJ.

The word "micropins" preferably means pins or nails. There can be plurality of pins or nails arranged in such a way to form a brush.

The most preferable technique being the use of micropins and it is very easily implementable and cost friendly. The micropins can therefore be preferably arranged in the form of a brush so that it can be easily used.

The number of micropores is preferably in the range of 200 to 400 per cm² of tea leaf, more preferably 250 to 400 cm² of tea leaf per and most preferably 300 to 400 per cm² of tea leaf.

The tea leaf preferably is not subject to maceration or any kind of size reduction process before the incubation step or in between the incubation step and step (b).

### Step (c):

After the incubation step as disclosed above the process includes exposing the tea leaf to a temperature of 15 to 35°C for 15 minutes to 4 hours. Preferably the temperature of exposure is 20 to 35°C, more preferably 25 to 35°C. The preferred time of exposure is for 30 minutes to 4 hours, more preferably for 60 minutes to 4 hours, further more preferably for 75 minutes to 4 hours most preferably for 90 minutes to 4 hours.

Step (c) may be achieved by keeping the leaf in an open atmosphere with the above described conditions, wherein "open atmosphere" preferably means in the presence of oxygen, and hence signifies aerobic conditions.

Without wishing to be bound by theory, it is believed that at the above step of exposure of the tea leaf in the above said temperature range in an open atmosphere initiates fermentation within the tea leaf. The term "fermentation" generally used in the case of regular black tea leaf manufacturing process wherein the lea leaves undergoes a process of size reduction (maceration) before the said fermentation which produces the typical sensorials of black tea. In the process of the present invention, the leaf does not undergo a step of size reduction and still able to produce a tea product which is having black tea characteristics with long leaf.

As a most preferable feature of the process of the present invention there is no step of comminution of the tea leaf before step (c).

After step (c), the leaf tea may preferably be further dried. The drying step is preferably carried out by thermal drying, freeze drying or vacuum drying.During the drying step, the tea leaf is preferably dried to moisture content of less than 10% by total mass of the tea leaf, more preferably less than 5 % by total mass of the tea leaf.

The drying step is preferably carried out by thermal drying, freeze drying or vacuum drying.

Thermal drying is preferably carried out by contacting the leaf with air; with the temperature of air being preferably 50 to 150°C, more preferably 60 to 130°C, most preferably 80 to 120°C. Thermal drying may be carried out in any conventional dryer. However, a fluidized bed dryer or a tray dryer is particularly preferred for thermal drying.

The leaf can also be dried by vacuum drying. During vacuum drying the tea leaf is subjected to an absolute pressure of preferably from 5 to 500 mm Hg, more preferably from 50 to 300 mm Hg and most preferably from 100 to 200 mm Hg. Vacuum drying is carried out at a temperature in the range of preferably 20 to 70°C, more preferably 25 to 60°C and most preferably 30 to 55°C. Vacuum drying may be carried out in any suitable vacuum drier, preferably in a rotary vacuum drier.

### The leaf tea product:

Black tea products are generally characterized by their sensorial that include taste and their relatively high of theaflavin content. The sensorial of the black tea product includes astringency, aroma, colour etc. The leaf tea product as obtained by the process of the present invention has a theaflavin content which is similar to that of a regular black tea product.

The theaflavin content of the tea product of the present invention is from 1.4 and 2% by weight, which is similar to the theaflavins content in the regular black tea product.

Black tea contains relatively low amount of catechins. Catechins are known to be beneficial for health. A further advantage of the process of the present invention is that it produces a leaf tea product with black tea characteristics having a relatively high catechin content when compared with a regular black tea product. The catechins content of the tea product of the present invention is from 3.5 to 5.5 % by weight and more preferably 4 to 5.5% by weight.

The length of the leaf in the leaf tea product of the present invention is preferably ranging from 10 mm to 60 mm, preferably 10 mm to 50 mm and more preferably 10 mm to 40 mm. length as mentioned herein preferably means the length of the tea leaf along its mid rib.

The width of the leaf in the leaf tea product of the present invention is preferably ranging from 3 mm to 40 mm, preferably 3 mm to 30 mm and most preferably 3 mm to 25 mm. Width as mentioned herein preferably means the length of the tea leaf across its mid rib (or perpendicular to mid rib).

The individual leaf area in the leaf tea product of the present invention is preferably ranging from 2 to 5 cm² and preferably from 2 to 4 cm².
Optionally the tea product may be blend with some other tea product to obtain unique characteristics. A leaf tea blend, which comprises 5 to 50% of a tea product of the present invention, is preferred.

Any feature of one aspect of the present invention may be utilized in any other aspect of the invention. The word "comprising" is intended to mean "including" but not necessarily "consisting of" or "composed of." In other words, the listed steps or options need not be exhaustive. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

Now the invention will be demonstrated in terms of examples. The following examples are just for illustration and in no way limits the scope of the present invention.

### Examples

### Preparation of different tea products:

### Example A:

Fresh tea leaves (moisture content 77%) were procured from the tea garden in southern India. These tea leaves were then dried to a moisture content of less than 5% (130°C in a tray drier for 20 minutes).

### Example B:

Fresh tea leaves (moisture content 77%) were procured from the tea garden in southern India. These tea leaves were the subjected to a process of microporation by rolling a brush equipped with plurality of pins having diameter of 60 µm to get about 200 to 400 micropores per cm² of the tea leaf. The size of the pores was 60 µm. After that the leaves were taken and dried to a moisture content of less than 5% (130°C in a tray drier for 20 minutes).

### Example C:

Fresh tea leaves (moisture content 77%) were procured from the tea garden in southern India. These tea leaves were then put in an air-tight aseptic plastic bag, sealed and incubated for 18 hours. After that, the incubated tea leaves were exposed to ambient temperature (25°C) for 90 minutes. After 90 minutes the leaves were taken and dried to a moisture content of less than 5% (130°C in a tray drier for 20 minutes).

### Example D:

This is the standard process for producing black leaf tea products. Fresh tea leaves (moisture content 77%) were procured from the tea garden in southern India. These leaves were then withered for 18 hours. After that, the tea leaves were subjected to CTC (cut tear curl) for 4 times to obtain macerated dhool. The macerated dhool were then fermentated (exposed to air at 25 °C) for 90 minutes. After 90 minutes the leaves were taken and dried to a moisture content of less than 5% (130°C in a tray drier for 20 minutes).

### Example 1:

Fresh tea leaves (moisture content 77%) were procured from the tea garden in southern India. These tea leaves were then put in an air-tight aseptic plastic bag, sealed and incubated for 18 hours. These tea leaves were the subjected to a process of microporation by rolling a brush equipped with micropins to get about 200 to 400 micropores per cm² of the tea leaf. The size of the pores was 60 µm. After that, the incubated tea leaves were exposed at ambient temperature (25°C) for 90 minutes. After 90 minutes the leaves were dried to a moisture content of less than 5% (130°C in a tray drier for 20 minutes).

Tea infusions were prepared for all the above tea products by infusing 2 g of leaf tea in 200 mL of freshly boiled water for 2 minutes without stirring and the measurement was done using the protocol described below.

### Measurement Methods:

### Sample Preparation for measuring catechins and theaflavins (TF) content:

### (a) Theaflavins (TF) content:

Samples were analysed by HPLC using an octadecylsilica (C18) column (Nova-pak ex. Waters, 3.9 mm i.d. × 150 mm) with detection at a wavelength of 380 nm, column temperature of 40°C, injection volume of 20 µL and flow rate of 1 mL/min. The mobile phases for the theaflavin analysis were 2% (v/v) acetic acid in water (as buffer A) and acetonitirile (as buffer B). A linear gradient from 8% B to 69% B over 50 min was used to separate the theaflavins following which the column was equilibrated with 8% of buffer A for 5 min. Pure theaflavins (Sigma Aldrich, > 90%, HPLC grade) were used as standard for quantification.

### (b) Catechin content:

Total catechin content was determined using the ISO method for the determination of catechins in green and black tea, using high performance liquid chromatography (ISO 14502-2:2005).

### (c) Colour measurement:

Colour (CIE L*a*b* values) was measured using a Hunter lab Ultrascan XE (Model-USXE/UNI version 3.4, Hunterlab Associates Laboratories Inc. Virginia). A halogen cycle lamp was used as the light source. The illuminant used was D65 and the measurements were made at 10°-Observer angle. Measurements were made using a quartz cuvette of 10 mm path length. Tea leaf was filled up to the brim in the cuvette and placed in the instrument for color measurement. The instrument was calibrated using a standard white tile (Hunterlab Duffuse/8°, mode-RSEX, Port-1" and area- large) in accordance with the instructions provided in the instructions manual. The L*a*b* values were measured at room temperature (25°C).

The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue.

The results are summarized below in Table 1.

**Table 1:**

| Examples | Polyphenols | | Colour Characteristics | | |
|---|---|---|---|---|---|
| | Catechins | Theaflavins | L* | a* | b* |
| A | BDL^{†} | BDL^{†} | 94.54 | -0.15 | 5.65 |
| B | 0.01 | 0.01 | 94.10 | -0.17 | 8 |
| C | 0.05 | 0.04 | 93.80 | -0.17 | 8.2 |
| D | 2.5 | 0.36 | 83.04 | 4.12 | 50.01 |
| 1 | 3.68 | 0.54 | 80.12 | 5.8 | 52.56 |

| | | | | | |
|---|---|---|---|---|---|
| ^{†}Below Detection Level | | | | | |

From the above table it is evident that the tea product obtained by the process of the present invention provides a tea infusion (Example1) which has more catechins and theaflavins when compared to the control examples (examples A to D). It is also noted that the infusion obtained from Example 1 is darker (lower L* value), redder (high a* value) and brighter (higher b*) value with respect to all the control examples A to D. As the process of Example 1 does not involve any step of size reduction i.e comminution, which is generally the characteristic step for black tea production, it retains the long leaf size. The tea product obtained by the process of the present invention (Example 1) has even better black tea characteristics than regular black tea (Example D).

The theaflavins and catechins content was measured for the leaf tea product obtained by Example 1 which is represented below:
Theaflavins Content: 1.68 % by weight of tea leaf.
Catechins Content: 4.01 % by weight of tea leaf.

Therefore, it is now possible by way of present invention to provide along leaf tea product with excellent black tea characteristic.

## Claims

1. A process of preparation of a leaf tea product with black tea characteristics comprising the steps of:
a. incubating fresh tea leaf at a temperature in the range 4°C to 60°C under anaerobic conditions for a period of 4 to 50 hours;
b. creating micropores having diameter in the range of 5 to 100 µm on the incubated leaf;
c. exposing the leaf to a temperature of 15 to 35°C for 15 minutes to 4 hours.

2. A process as claimed in claim 1 wherein the micropores are made using a technique selected from the group consisting of: lasers, sand blasting, dry ice blasting, micro-pins, electroporation, and combinations of one or more thereof.

3. A process as claimed in any one of the preceding claims 1 or 2 wherein the number of micropores are in the range of 200 to 400 per cm² of tea leaf.

4. A process as claimed in claim 1 wherein there is no step of comminution of the tea leaf before step (c).

5. A process as claimed in one of claims 1 to 4 further comprising the step of drying the tea leaf at a temperature of 50 to 150°C.

6. A process as claimed in any one of claims 1 to 5 wherein the anaerobic conditions are achieved by:
i. placing the fresh tea leaf in a container, and closing the container, or;
ii. placing the tea leaf in a container, purging a gas other than oxygen through the container, and closing the container, or placing the leaf in an airtight chamber or under vacuum.

7. A leaf tea product as obtained and/or obtainable by the process as claimed in any one of claims 1 to 6.

8. A tea product as claimed in claim 7 wherein the length of the leaf in the black leaf tea product is from 10 mm to 60 mm.

9. A tea product as claimed in claim 7 or claim 8 wherein the width of the leaf in the black leaf tea product is from 3 mm to 40 mm.

10. A leaf tea product as claimed in any one of claims 7 to 9 wherein the individual leaf area in the black tea product is from 2 to 5 cm².

11. A leaf tea product as claimed in any one of claims 7 to 10 wherein the catechins content of the leaf tea product is from 3.5 to 5.5 % by weight.

12. A leaf tea blend which comprises 5 to 50% of the tea product as claimed in any one of claims 7 to 11.

## Patentansprüche

1. Verfahren zur Herstellung eines Blattteeproduktes mit den Charakteristiken von schwarzem Tee, umfassend die Schritte:
a. Inkubieren frischen Teeblatts bei einer Temperatur in dem Bereich von 4°C bis 60°C unter anaeroben Bedingungen für eine Zeitdauer von 4 bis 50 Stunden;
b. Erzeugen von Mikroporen, die einen Durchmesser in dem Bereich von 5 bis 100 µm aufweisen, auf dem inkubierten Blatt;
c. Aussetzen des Blatts einer Temperatur von 15°C bis 35°C für 15 Minuten bis zu 4 Stunden.

2. Verfahren, wie im Anspruch 1 beansprucht, wobei die Mikroporen unter Verwendung einer Technik ausgebildet werden, die aus der Gruppe ausgewählt ist, die aus Lasern, Sandstrahlen, Trockeneisstrahlen, Micro-Pins, Elektroporation und Kombinationen von einem oder mehreren hiervon besteht.

3. Verfahren, wie in irgendeinem der vorhergehenden Ansprüche 1 oder 2 beansprucht, wobei die Anzahl der Mikroporen in dem Bereich von 200 bis 400 pro cm² des Teeblatts beträgt.

4. Verfahren, wie im Anspruch 1 beansprucht, wobei vor der Maßnahme (c) keine Maßnahme der Zerkleinerung des Teeblattes erfolgt.

5. Verfahren, wie in einem der Ansprüche 1 bis 4 beansprucht, das ferner die Maßnahme des Trocknens des Teeblatts bei einer Temperatur von 50°C bis 150°C umfasst.

6. Verfahren, wie in irgendeinem der Ansprüche 1 bis 5 beansprucht, wobei die anaeroben Bedingungen erreicht werden durch:
i. Legen des frischen Teeblatts in einen Behälter und Verschließen des Behälters oder
ii. Legen des Teeblatts in einen Behälter, Spülen eines Gases, außer Sauerstoff, durch den Behälter und Verschließen des Behälters oder Legen des Blatts in eine luftdichte Kammer oder unter Vakuum.

7. Blattteeprodukt, erhalten und/oder erhältlich durch das Verfahren, wie in irgendeinem der Ansprüche 1 bis 6 beansprucht.

8. Teeprodukt, wie im Anspruch 7 beansprucht, wobei die Länge des Blatts in dem schwarzen Blattteeprodukt von 10 mm bis 60 mm beträgt.

9. Teeprodukt, wie im Anspruch 7 oder Anspruch 8 beansprucht, wobei die Breite des Blatts in dem schwarzen Blattteeprodukt von 3 mm bis 40 mm beträgt.

10. Blattteeprodukt, wie in irgendeinem der Ansprüche 7 bis 9 beansprucht, wobei der individuelle Blattbereich in dem schwarzen Teeprodukt von 2 bis 5 cm² beträgt.

11. Blattteeprodukt, wie in irgendeinem der Ansprüche 7 bis 10 beansprucht, wobei der Gehalt des Blattteeprodukts an Katechinen von 3,5 bis 5,5 Gewichts-% beträgt.

12. Blattteemischung, die 5 bis 50% des Teeprodukts, wie in irgendeinem der Ansprüche 7 bis 11 beansprucht, umfasst.

## Revendications

1. Procédé de préparation d'un produit de thé en feuilles avec des caractéristiques de thé noir comprenant les étapes de :
a. incubation de feuilles de thé fraîches à une température dans l'intervalle de 4°C à 60°C dans des conditions anaérobies sur une période de 4 à 50 heures ;
b. création de micropores ayant un diamètre dans l'intervalle de 5 à 100 µm sur la feuille incubée ;
c. exposition de la feuille à une température de 15 à 35°C pendant de 15 minutes à 4 heures.

2. Procédé selon la revendication 1, dans lequel les micropores sont fabriqués en utilisant une technique choisie dans le groupe consistant en : lasers, sablage, projection de carboglace, micro-pointes, électroporation, et combinaisons d'un ou plusieurs de ceux-ci.

3. Procédé selon l'une quelconque des revendications 1 ou 2 précédentes, dans lequel le nombre de micropores se trouve dans l'intervalle de 200 à 400 par cm² de feuille de thé.

4. Procédé selon la revendication 1, dans lequel il n'y a pas d'étape de broyage sur la feuille de thé avant l'étape (c).

5. Procédé selon l'une quelconque des revendications 1 à 4 comprenant de plus l'étape de séchage de la feuille de thé à une température de 50 à 150°C.

6. Procédé selon l'une quelconque des revendications 1 à 5, dans lequel les conditions anaérobies sont réalisées par :
i. disposition de la feuille de thé fraîche dans un récipient, et fermeture du récipient, ou ;
ii. disposition de la feuille de thé dans un récipient, purge d'un gaz différent de l'oxygène à travers le récipient, et fermeture du récipient, ou disposition de la feuille dans une chambre étanche à l'air ou sous vide.

7. Produit de thé en feuilles comme obtenu et/ou pouvant être obtenu par le procédé selon l'une quelconque des revendications 1 à 6.

8. Produit de thé selon la revendication 7, dans lequel la longueur de la feuille dans le produit de thé noir en feuilles est de 10 mm à 60 mm.

9. Produit de thé selon la revendication 7 ou la revendication 8, dans lequel la largeur de la feuille dans le produit de thé noir en feuilles est de 3 mm à 40 mm.

10. Produit de thé en feuilles selon l'une quelconque des revendications 7 à 9, dans lequel la surface de feuille individuelle dans le produit de thé noir est de 2 à 5 cm².

11. Produit de thé en feuilles selon l'une quelconque des revendications 7 à 10, dans lequel la teneur en catéchines du produit de thé en feuilles est de 3,5 à 5,5 % en masse.

12. Combinaison de thé en feuilles qui comprend de 5 à 50 % du produit de thé selon l'une quelconque des revendications 7 à 11.
